# EUROPEAN PATENT APPLICATION

(11) **EP 3 487 121 A1**
(43) Date of publication of application: **22.05.2019**
(21) Application number: 17001898.0
(22) Date of filing: 21.11.2017
(51) Int. Cl.: H04L 12/24, H04W 8/24, H04W 4/50

(54) **METHOD FOR UPDATING A FIRMWARE OF AN IOT-DEVICE OVER THE AIR**

(71) Applicant: Giesecke+Devrient Mobile Security GmbH, 81677 München (DE)
(72) Inventor: Tea, Vui Huang, SE-12061 Stockholm (SE)

(57) **Abstract**

The invention relates to a method for updating a firmware of an IoT-device (10) over the air from a device management system (20). On receiving a request from the IoT-device (10) to update its firmware, an initiating message is sent from the device management system (20) to an emulator (24) of the device management system (20). The emulator (24) prepares the firmware-update by downloading a firmware files from the device management system (20) and obtaining a first message authentication code from the firmware files for later authentication. The firmware files and the first authentication code are provided as download information for download by the IoT-device (10) on receiving an UDP request from the IoT-device (10). Finally, the downloaded firmware files is installed on the IoT-device (10), in case that a second message authentication code calculated by the IoT-device (10) matches the first message authentication code.

## Description

The invention relates to a method for updating a firmware of an IoT-device over the air from a device management system. The method comprises the steps of transmitting an initiating message on receiving a request from the IoT-device to update its firmware, preparing the firmware-update, providing a download information which enables the IoT-device to download a firmware files from the device management system via a public network, and installing the downloaded firmware files on the IoT-device.

Firmware updates of mobile devices, such as mobile phones, can be done with FOTA (Firmware Over The Air). With FOTA, it is possible to update the entire firmware, from the Operating System (OS) kernel and middleware to the top of the built-in application stack. FOTA uses OMA-DM (Open Mobile Alliance Device Management) enabler called FUMO (Firmware Update Management Object).

Updating the firmware of a mobile phone using OMA-DM FOTA comprises the following steps: the user of the mobile phone enters the phone number in a customer care assistant (CCA) of a device management system. On receiving the phone number, the device management system fetches the latest stored firmware version from a database to determine whether there is a new firmware files (hereinafter referred to as firmware package as well) available. The result is output on a user interface of the CCA. In case a new firmware files is available, the user initiates an update. The FOTA workflow starts by calling a start-command in an application programmable interface of the device management system (DMS API). The device management system sends an initiating message "pkg#0". Next, the mobile phone connects with the device management system. When the mobile phone is connected and au-device management system. When the mobile phone is connected and authenticated by the device management system, the workflow resumes and starts the FOTA logic in the device management system. The device management system stores the correct firmware files in a memory and does a replace on the so-called "PkgUrl"-node with the location (URL - Unified Resource Locator) to a device management download descriptor servlet. After that, the session closes. The mobile phone downloads via HTTP (Hyper Text Transfer Protocol) the download descriptor which is a file that contains an information about the firmware files and the download URL. After having received that information, the mobile phone downloads the firmware files via HTTP and installs it. Finally, the mobile phone connects to the device management system again and sends a so-called "generic alert" which contains the status for the firmware update.

The procedure described above enables firmware updating over the air for mobile devices which do support FUMO.

The Internet of Things (IoT) is the network of physical devices, vehicles, home appliances, and other items embedded with electronics, software, sensors, actuators, and network connectivity which enable these objects to connect and exchange data. Each thing is uniquely identifiable through its embedded computing system but is able to inter-operate within the existing internet infrastructure. The IoT allows objects to be sensed or controlled remotely across existing network infrastructure, creating opportunities for more direct integration of the physical world into computer-based systems, and resulting in improved efficiency, accuracy and economic benefit in addition to reduced human intervention.

IoT-devices may be realized in the form of NarrowBand IoT (NB-IoT)-devices. NB-IoT is a Low Power Wide Area Network (LPWAN) radio technology standard developed to enable a wide range of devices and services to be connected using cellular telecommunication bands. NB-IoT is a narrow band radio technology designed for the Internet of Things and is one of a range of mobile IoT technologies standardized by the 3^{rd} generation partnership project (3GPP). NB-IoT focusses specifically on indoor coverage, low cost, long battery life, and enabling a large number of connected devices.

NB-IoT-devices do not support FUMO and necessitate a whole new infrastructure for updating firmware over the air. One reason for that is that protocols are not supported, neither HTTP nor SMS communications.

It is therefore an object of the present invention to provide an easy method for updating a firmware of an IoT-device, in particular a NB-IoT-device, over the air which is able to use existing infrastructure in particular FUMO of OMA-DM.

It is a further object of the present invention to provide a system for updating the firmware of an IoT-device, in particular a NB-IoT-device, which is possible to carry out the method according to the invention.

These objects are solved by a method according to the features of claim 1 and a system according to the features of claim 15. Preferred embodiments are set out in the dependent claims.

According to a first aspect of the present invention, a method for updating a firmware of an IoT-device over the air from a device management system is provided. In particular, the IoT-device may be a NB-IoT-device as set out above. The method comprises the steps of transmitting an initiating message on receiving a request from the IoT-device to update its firmware, preparing the firmware-update, providing a download information enabling the IoT-device to download a firmware files from the device management system via a public network, and installing the downloaded firmware files on the IoT-device.

According to the invention, the initiating message is sent from the device management system to an emulator of the device management system. The emulator, on receiving the initiating message, prepares the firmware-update by downloading the firmware files from the device management system and obtaining a first message authentication code from the firmware files for later authentication. The firmware files and the first authentication code are provided as download information for download by the IoT-device on receiving an UDP (User Datagram Protocol) request from the IoT-device. The downloaded firmware files is installed on the IoT-device, in case that a second message authentication code calculated by the IoT-device matches the first message authentication code.

By using an emulator in the device management system firmware-updates over the air can be provided for IoT-devices, in particular NB-IoT-devices. The emulator bridges FOTA which uses OMA-DM enabler called FUMO and NB-IoT-devices which do not support FUMO. The method enables the reuse of existing FOTA infrastructure, thus preserving prior investments made into it, as well as supporting legacy non-IoT-devices.

The request from the IoT-device to update its firmware triggers the transmission of the initiating message. The request may be a start-input of a user in an API of the device management system to install the new firmware of the IoT-device.

According to a preferred embodiment, the emulator downloads a download descriptor containing an information about the firmware files and a download location in a network, in particular an URL (Unified Resource Locator).

According to a further preferred embodiment, the emulator resolves a number uniquely identifying a subscription of the IoT-device in a mobile network, in particular a MSISDN (Mobile Station International Subscriber Directory Number), into an integrated circuit card identifier (ICCID) & International Mobile Equipment Identifier (IMEI) by querying a database of the device management system. The MSISDN may be entered in a customer care assistant of the device management system by a user to check whether a new firmware is available for the NB-IoT-device or not. The IMEI is used for identifying the device, it includes information on the origin, model, and serial number of the device. The structure of the IMEI/SV is specified in 3GPP TS 23.003. The model and origin comprises the initial 8-digit portion of the IMEI/SV, known as the Type Allocation Code (TAC). This allows the invention to determine the vendor and model of the NB-IoT module, and hence the corresponding firmware files that are applicable and relevant to this IoT device.

According to a further preferred embodiment, the emulator downloads the firmware files from the location contained in the download descriptor. The firmware files will be stored on a storage of the device management system for a later download from the IoT-device.

According to a further preferred embodiment, the emulator calculates a hash value of the firmware files and sends the hash value and the integrated circuit card identifier (ICCID) to a computing unit, e.g. a re-encryption server of the device management system, for encryption to obtain the first message authentication code. The first message authentication code can be used to authenticate a message, as a key is required to determine the hash value. The document management system (as a sender) computes the hash value with a secret key, and sends the hash value to the IoT-device (as a receiver), where the IoT-device then calculates the hash value of the message, and uses the secret key. If the hash value received is the same as that of the computed one, the message has not been tampered with.

According to a further preferred embodiment, the emulator stores the downloaded file and the first message authentication code on a storage of the device management system to await download from the IoT-device.

According to a further preferred embodiment, the IoT-device sends an UDP-request to the emulator to check for a new firmware. It is preferred that the IoT-device sends the UDP-request with a predetermined frequency and/or at power-on or cold/warm reboot. The UDP-request may be sent from a FOTA-client of the IoT-device.

According to a further preferred embodiment, the IoT-device calculates a hash value of the downloaded firmware files for obtaining the second message authentication code. This will be used, as described, to verify whether the message has been tampered with.

In particular, the hash value may be calculated by the FOTA-client and the second authentication code may be calculated by an end-to-end security applet (E2E-applet) of the IoT-device.

According to a further preferred embodiment, the firmware files is downloaded from the device management system over UDP which is supported for communication by IoT-devices, in particular NB-IoT-devices, only.

According to a further preferred embodiment, the IoT-device sends a status information to the device management system which contains a status for the firmware update. The status information may be a "Generic Alert" which contains the status for the firmware update.

According to a second aspect, a computer program product directly loadable into the internal memory of a digital computer is suggested, the computer program product comprising software code portions for performing the steps of the method as described herein when said product is run on a computer. The computer program product may be in the form of any storage medium, such as a USB memory device, a DVD, a CD-ROM and the like. The computer program product may also be loadable via a wired or wireless network.

According to a third aspect of the present invention, a system for updating a firmware of an IoT-device over the air from a device management system is suggested. The system comprises a first means for transmitting an initiating message on receiving a request from the IoT-device to update its firmware, a second means for preparing the firmware-update, a third means for providing a download information enabling the IoT-device to download a firmware files from the device management system via a public network, and a forth means for installing the downloaded firmware files on the IoT-device. The first means is adapted to send the initiating message from the device management system to an emulator of the device management system. The emulator is adapted to, on receiving the initiating message, prepare the firmware-update by downloading the firmware files from the device management system and obtaining a first message authentication code from the firmware files for later authentication. The third means is adapted to provide the firmware files and the first authentication code as download information for download by the IoT-device on receiving an UDP-request from the IoT-device. The forth means is adapted to install the downloaded firmware files on the IoT-device, in particular a IoT module, in case that a second message authentication code calculated by the IoT-device matches the first message authentication code.

The system may comprise further means for carrying out the steps according to the method as explained in the present application.

According to a forth aspect, an IoT-device, in particular a NB-IoT-device, is suggested, comprising an IoT-module for communicating with other IoT-devices of the Internet of Things, a NB-IoT-FOTA client for verifying whether a downloaded download file has not been tampered with or altered, and a NB-IoT-SIM module having an end-to-end security applet of the IoT-device to calculate the second authentication code. The firmware update is to be installed on the IoT-module. The FOTA client is adapted to send an UDP-request to the device management system to check for a new firmware. The FOTA client is further adapted to download a firmware package in case that a new firmware is available. Furthermore, the FOTA client is adapted to calculate a hash value and to send it to the E2E applet for determining the second message authentication code.

According to a fifth aspect, a device management system is provided, comprising a FOTA-emulator which is adapted to carry out the steps of the method as described herein. In particular, the emulator is adapted to prepare the firmware-update requested by the IoT-device by downloading a firmware files from the device management system and obtaining a first message authentication code from the firmware files for later authentication of the IoT-device.

Further features and advantages of the present invention will be described by reference to the accompanying figures.

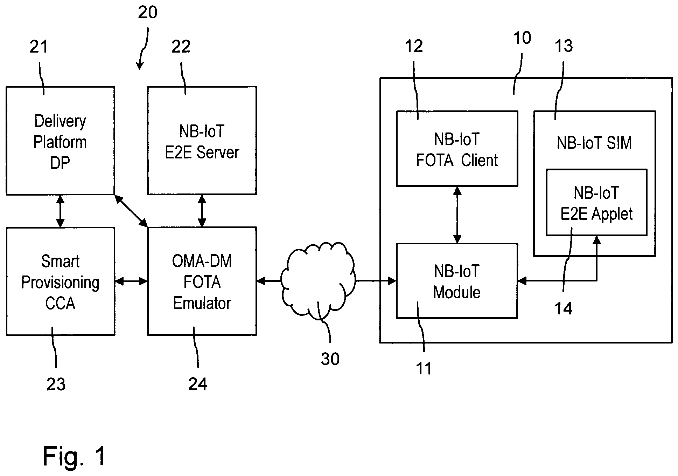

Fig. 1 shows a schematic diagram of a system for updating a firmware of an IoT-device over the air according to the invention.

Fig. 1 illustrates a schematic diagram of a system for updating the firmware of an IoT-device 10 over the air. The firmware is provided by a device management system 20.

According to the present embodiment and only for illustration purposes only, the IoT-device 10 is a NarrowBand IoT-device (NB-IoT-device) which is based on a low power wide area network radio technology standard. NB-IoT-devices enable a wide range of devices and services to be connected using cellular telecommunication bands. NB-IoT is a narrow band radio technology designed for the Internet of Things (IoT) and is one of a range of mobile IoT (MIoT) technologies standardized by the 3^{rd} Generation Partnership Project (3GPP). The NB-IoT-device 10 may be a physical device, a vehicle, a home appliance, or any other item embedded with electronics, software, sensors, actuators, and so on.

For network connectivity, the NB-IoT-device 10 comprises a NB-IoT-module 11 on which the firmware which is to be updated is running, and of which the current version of the firmware is recorded in the database of the device management system, or otherwise is made known to the device management system . In addition, a NB-IoT SIM (Subscriber Identity Module) 13 is provided to which a MSISDN (Mobile Station International Subscriber Directory Number) is assigned to. The NB-IoT SIM 13 furthermore comprises a NB-IoT E2E (end-to-end) security applet 14 (hereinafter: E2E applet). The E2E applet 14 is provided to calculate a message authentication code. Furthermore, the NB-IoT-device 10 comprises a NB-IoT FOTA client 12 supporting firmware update over the air using OMA-DM and its enabler FUMO.

The device management system 20 comprises a delivery platform (DP) 21 which is a database of the device management system 20, a NB-IoT E2E server 22, a smart provisional custumer care assistant (CCA) 23 and an OMA-DM (Open Mobile Alliance Device Management) FOTA emulator 24. The document management system 20 and the NB-IoT-device 10 are connected to each other via a public network 30, e.g. the internet, to exchange data.

As known to the skilled person, the NB-IoT-device 10 only supports UDP communication. Furthermore, the NB-IoT-module 11 is not able to update its firmware by itself. Instead, it needs the NB-IoT-device 10 to do the firmware update on its behalf.

As a further prerequisite it is to be realized that FOTA requests are always a pull from the NB-IoT-device 10.

The method for updating the firmware of the NB-IoT-device 10 over the air is as follows:
1. A user enters the MSISDN phone number of the NB-IoT SIM 13 in the smart provisioning CCA 23 of the device management system 20. As a result, the latest stored IMEI (International Mobile Equipment Identity) and the latest firmware package are fetched from the delivery platform 21. As known to the skilled person, the IMEI is a number to identify 3GPP devices by transmission of an international mobile subscriber identity (IMSI) number which is stored on a SIM card, i.e. the NB-IoT SIM 13. IMEI and the version of the firmware package are used to determine if there is a new firmware files available for the NB-IoT module 11 connected to the requested NB-IoT SIM 13 of the NB-IoT-device 10. The result may be displayed in a graphical user interface (GUI) of the smart provisioning CCA 23 of the device management system 20.
2. The user can initiate the update of a new firmware files by a request, e.g. pressing a start button which initiates a routine in the device management system API. The device management system 20 sends an initiating message (pkg#0) to the FOTA emulator 24.
3. The FOTA emulator 24 connects to the device management system 20. When the FOTA emulator 24 is connected and authenticated, the workflow resumes and starts the FOTA logic in the device management system 20. The device management system stores the correct firmware files for requesting the NB-IoT-device 10 in a memory (not shown) and does a replace on the PkgUrl node with the URL to a download descriptor servlet (DmDownloadDescriptorServlet). Then, the session closes.
4. The FOTA emulator 24 downloads the download descriptor via HTTP. The download descriptor is a file that contains an information about the firmware package and its download-URL.
5. The FOTA emulator 24 resolves the MSISDN into an ICCID (Integrated Circuit Card Identifier), e.g. by querying the delivery platform 21.
6. The FOTA emulator uses the download-URL to download the new firmware package for the requesting NB-IoT-device 10.
7. The FOTA emulator 24 then calculates a hash value of the downloaded firmware files. The hash value and the ICCID are sent to the E2E server 22 (which may be a re-encryption server for encryption) to obtain a first message authentication code (MAC). The first message authentication code will be used to authenticate a message, as a key is required to determine the hash value. In general, a sender (here: the device management system 20) computes the hash value with a secret key and sends it to a receiver (here: the NB-IoT-device 10) where the receiver then calculates the hash value of the message and uses the secret key. If the received hash value is the same as the computed one, the message has not been tampered with.
8. The FOTA emulator 24 stores the first message authentication code and the firmware package on a memory of the device management system 20 to await download from the NB-IoT-device 10.
9. On a predetermined frequency, the FOTA client 12 of the NB-IoT-device 10 sends an UDP-request to the FOTA emulator 24 to check for a new firmware. If a new firmware is available for download, the FOTA client 12 of the NB-IoT-device 10 downloads the new firmware package via HTTP over UDP.
10. On download completion, the FOTA client 12 in the NB-IoT-device 10 calculates a hash value of the downloaded firmware package and sends it to the E2E applet 14 in the NB-IoT SIM 13 to generate its copy of the message authentication code which corresponds to a second message authentication code. If the first and the second message authentication codes match, then the firmware package is authenticated and the NB-IoT-device 10 can trust that the downloaded firmware files which has been transmitted over the public network 30 has not been tampered with or altered.
11. The FOTA client 12 in the NB-IoT-device 10 unpacks the firmware package and installs it into the NB-IoT module 11 in the corresponding sequence.
12. On completion or failure of installation of the new firmware, the FOTA client 12 in the NB-IoT-device 10 sends a status information to the FOTA emulator 24.
13. The FOTA emulator 24 connects to the device management system 20 again and sends a "Generic Alert" which contains the status for the firmware update.

### Positionsliste

- 10: IoT-device
- 11: IoT module
- 12: FOTA client
- 13: IoT SIM
- 14: E2E Applet
- 20: device management system
- 21: delivery platform
- 22: E2E Server
- 23: smart provisioning customer care assistant
- 24: FOTA emulator
- 30: public network

## Claims

1. A method for updating a firmware of an IoT-device (10) over the air from a device management system (20), comprising the steps of:
- transmitting an initiating message on receiving a request from the IoT-device (10) to update its firmware;
- preparing the firmware-update;
- providing a download information enabling the IoT-device (10) to download a firmware files from the device management system (20) via a public network (30); and
- installing the downloaded firmware files on the IoT-device (10);
**characterized in that**
- the initiating message is sent from the device management system (20) to an emulator (24) of the device management system (20);
- the emulator (24), on receiving the initiating message, prepares the firmware-update by downloading the firmware files from the device management system (20) and obtaining a first message authentication code from the firmware files for later authentication;
- the firmware files and the first authentication code are provided as download information for download by the IoT-device (10) on receiving an UDP request from the IoT-device (10); and
- the downloaded firmware files is installed on the IoT-device (10), in case that a second message authentication code calculated by the IoT-device (10) matches the first message authentication code.

2. The method according to claim 1, wherein the emulator (24) downloads a download descriptor containing an information about the firmware files and a download location in a network, in particular an URL.

3. The method according to one of the preceding claims, wherein the emulator resolves a number uniquely identifying a subscription of the IoT-device (10) in a mobile network, in particular a MSISDN, into an integrated circuit card identifier (ICCID) by querying a database (21) of the device management system (20).

4. The method according to any one of the preceding claims, wherein the emulator (24) downloads the firmware files from the location contained in the download descriptor.

5. The method according to any one of the preceding claims, wherein the emulator (24) calculates a hash value of the firmware files and sends the hash value and the integrated circuit card identifier to a computing unit for encryption to obtain the first message authentication code.

6. The method according to any one of the preceding claims, wherein the emulator (24) stores the downloaded file and the first message authentication code on a storage of the device management system (20) to await download from the IoT-device (10).

7. The method according to any of the preceding claims, wherein the IoT-device (10) sends an UDP-request to the emulator (24) to check for new firmware.

8. The method according to claim 7, wherein the IoT-device sends the UDP-request with a predetermined frequency.

9. The method according to any of the preceding claims, wherein the UDP-request is sent from a FOTA-client (12) of the IoT-device (10).

10. The method according to any of the preceding claims, wherein the IoT-device (10) calculates a hash value of the downloaded firmware files for obtaining the second message authentication code.

11. The method according to claim 10, wherein the hash value is calculated by the FOTA-client (12) and the second authentication code is calculated by an end-to-end security applet (14) of the IoT-device (10).

12. The method according to any of the preceding claims, wherein the firmware files is downloaded over UDP.

13. The method according to any of the preceding claims, wherein the IoT-device (10) sends a status information to the device management system (20) which contains a status for the firmware update.

14. Computer program product directly loadable into the internal memory of a digital computer, comprising software code portions for performing the steps of one of the preceding claims when said product is run on a computer.

15. System for updating a firmware of an IoT-device (10) over the air from a device management system (20), comprising:
- a first means for transmitting an initiating message on receiving a request from the IoT-device (10) to update its firmware;
- a second means for preparing the firmware-update;
- a third means for providing a download information enabling the IoT-device (10) to download a firmware files from the device management system (20) via a public network (30); and
- a fourth means for installing the downloaded firmware files on the IoT-device (10);
**characterized in that**
- the first means is adapted to send the initiating message from the device management system (20) to an emulator (24) of the device management system (20);
- the emulator (24) is adapted to, on receiving the initiating message, prepare the firmware-update by downloading the firmware files from the device management system (20) and obtaining a first message authentication code from the firmware files for later authentication;
- the third means is adapted to provide the firmware files and the first authentication code as download information for download by the IoT-device (10) on receiving an UDP request from the IoT-device (10); and
- the fourth means is adapted to install the downloaded firmware files on the IoT-device (10), in case that a second message authentication code calculated by the IoT-device (10) matches the first message authentication code.
